Europäisches Patentamt

European Patent Office

Office européen des brevets

(11) Publication number: **0 647 917 A2**

# EUROPEAN PATENT APPLICATION

(21) Application number: **94117849.3**

(51) Int. Cl.6: **G06K 7/14**

(22) Date of filing: **28.02.92**

(30) Priority: **04.03.91 JP 37624/91**
**06.03.91 JP 39755/91**

(43) Date of publication of application:
**12.04.95 Bulletin 95/15**

(60) Publication number of the earlier application in accordance with Art.76 EPC: **0 502 440**

(84) Designated Contracting States:
**DE FR GB**

(71) Applicant: **FUJITSU LIMITED**
**1015, Kamikodanaka**
**Nakahara-ku**
**Kawasaki-shi**
**Kanagawa 211 (JP)**

(72) Inventor: **Watanabe, Mitsuo, c/o Fujitsu Limited**

Patent Department,
1015 Kamikodanaka,
Nakahara-ku
Kawasaki-shi,
Kanagawa 211 (JP)
Inventor: **Kawai, Hiroaki, c/o Fujitsu Limited**
Patent Department,
1015 Kamikodanaka,
Nakahara-ku
Kawasaki-shi,
Kanagawa 211 (JP)

(74) Representative: **Stebbing, Timothy Charles et al**
**Haseltine Lake & Co.**
**Hazlitt House**
**28 Southampton Buildings**
**Chancery Lane**
**London WC2A 1AT (GB)**

(54) **Bar-code reading apparatus and method.**

(57) A bar-code reading apparatus and method in which a bar code including a main-part bar code and an add-on bar code is read, a start guard bar (SB) and end guard bar (EB) of the main-part bar code are detected, and the bar code is decoded into characters, the apparatus/method comprising means for/steps of detecting a right end of the main-part bar code based on the start guard bar (SB) and end guard bar (EB), identifying an add-on bar code by detecting a bar code occurring a predetermined interval after the right end, and decoding the add-on bar code.

FIG.6

The present invention relates to a bar-code reading apparatus and method, particularly for reading so-called "add-on" bar codes.

A bar-code reader, which reads product codes of alphanumeric characters represented by series of adjacent stripes of various widths, is widely used as a terminal of a point of sale (POS) system, for example. To facilitate the management of sales by increasing the amount of product information recorded on a bar code, a bar-code system which has a normal bar code (below, a main-part bar code) followed by an additional bar code (below, an add-on bar code), is recently being put into practical use.

Accordingly, a bar-code reader which can read an add-on bar code properly and efficiently is in great demand.

A bar-code reader usually reads a bar code by scanning a laser beam over the bar code, measuring the widths of the black and white bars based on the light reflected and converting the bar widths into alphanumeric characters. Conventional bar-code readers are designed mostly for main-part bar codes, with little consideration of add-on bar codes. It appears that there is no established method of reading an add-on bar code fully automatically and economically.

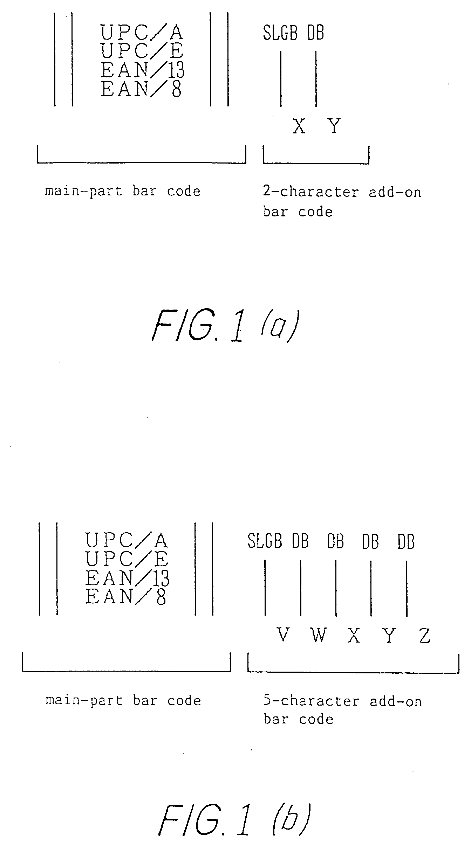

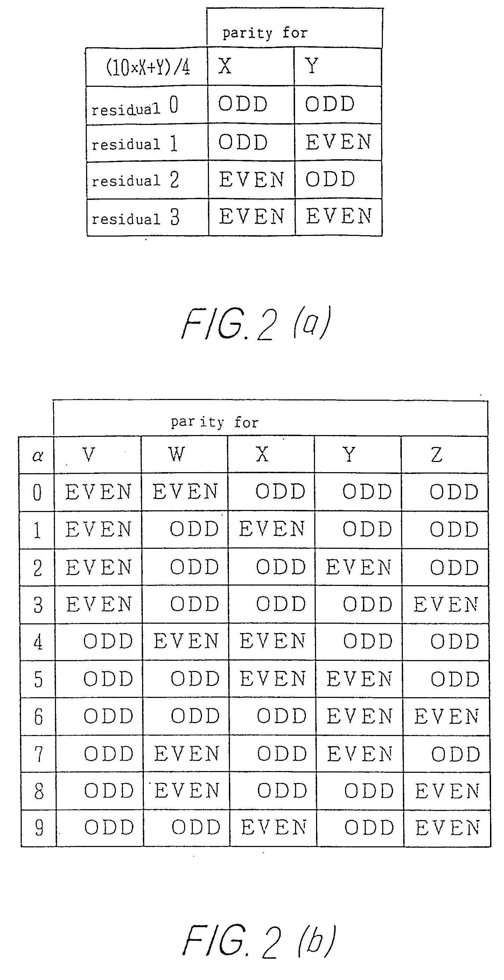

Fig. 1(a) shows a configuration of a bar code having a 2-character add-on bar code. Fig. 2(a) is an odd-even parity configuration table for a 2-character add-on bar code.

As shown in Fig. 1(a), a bar code having an add-on bar code is composed of a main part and an add-on part. The format of the main part is stipulated by such code system standards as UPC/A, UPC/E, EAN/13 and EAN/8. The 2-character add-on part includes a special left guard bar (SLGB), a first character labelled here as X, a delineate bar (DB) and a second character Y. X and Y are arbitrary alphanumeric characters, each carrying odd-even parity. The parity for the characters X and Y is determined, as shown in Fig. 2-(a), by using the residual of a 2-digit decimal number XY divided by 4, where X and Y are the tens and unit digits, respectively.

Fig. 1(b) shows a configuration of a bar code having a 5-character add-on bar code. Fig. 2(b) is an odd-even parity configuration table for this add-on bar code.

As shown in Fig. 1(b), the 5-character add-on part includes a SLGB and a character followed by 4 pairs of a DB and a character, the characters being labelled V, W, X, Y and Z. The parity for the five characters is determined, as shown in Fig. 2-(b), by using the unit digit $\alpha$ obtained from the following calculation:-

$$(V + X + Z) \times 3 + (W + Y) \times 9.$$

As described above, a problem of a conventional bar-code reader is that it cannot read an add-on bar code economically or with a high reading capacity.

It is therefore desirable to provide a bar-code reader which can automatically read an add-on bar code properly and economically, and with an improved reading capacity.

According to a first aspect of the present invention, there is provided bar-code reading apparatus for reading a bar code, including a main-part bar code and an add-on bar code, detecting a start guard bar and end guard bar of the main-part bar code and decoding the read bar code into characters, comprising:-

right-end detection means for detecting a right end of the main-part bar code based on the start guard bar and end guard bar;

add-on bar-code detection means for detecting a bar code occurring a predetermined interval after the right end as the add-on bar code; and

means for decoding the add-on bar code detected by said add-on bar code detection means.

According to a second aspect of the present invention, there is provided a bar-code reading method in which a bar code including a main-part bar code and an add-on bar code is read, a start guard bar and end guard bar of the main-part bar code are detected, and the bar code is decoded into characters, the method comprising the steps of:-

detecting a right end of the main-part bar code based on the start guard bar and end guard bar;

identifying an add-on bar code by detecting a bar code occurring a predetermined interval after the right end; and

decoding the add-on bar code.

A bar-code reader embodying the present invention determines a right end of the main-part bar code by detecting the start guard bar and end guard bar, judges a bar code which occurs a predetermined interval after the right end to be an add-on bar code, and reads the add-on bar code.

Reference is made, by way of example, to the accompanying drawings in which:-

Figs. 1(a) and (b) show a configuration of a bar code having a 2-character or 5-character add-on bar code, respectively;

Figs. 2(a) and (b) are odd-even parity configuration tables for a 2-character or 5-character add-on bar code, respectively;

Figs. 3(a) to (c) show configurations of bar codes having an add-on bar code, according to:-

(a) UPC system,

(b) UPC/A, EAN8 or EAN13 system, and

(c) UPC/E system respectively;

Fig. 4 shows a relationship between a bar code configuration and laser beam scanning;

Fig. 5 is a block diagram of an embodiment of the present invention;

Fig. 6 is a detailed circuit of part of a bar-code decoder; and

Fig. 7 is a flowchart explaining reading of an add-on bar code.

Throughout the drawings, identical reference numerals are used to designate the same or similar component parts.

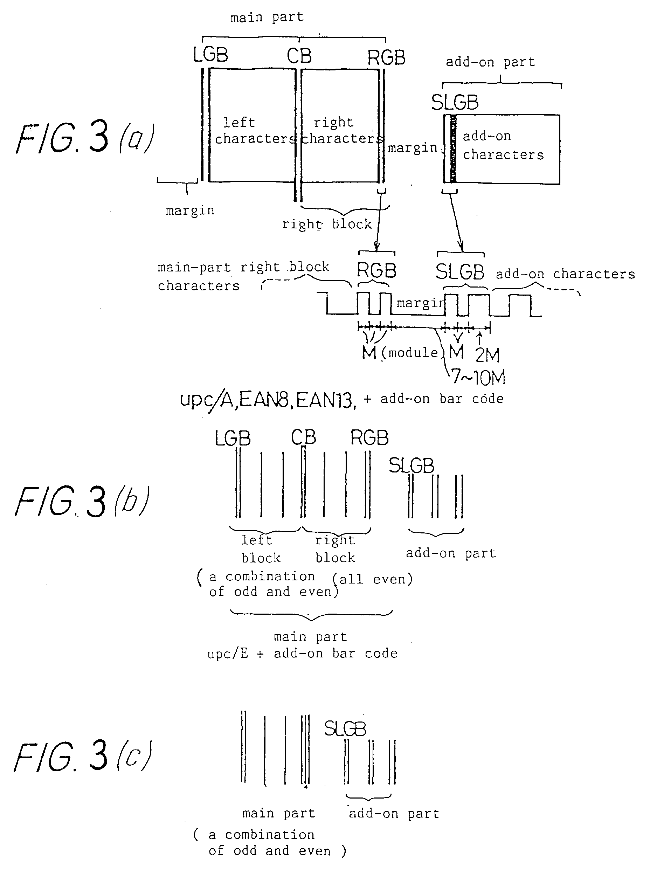

The use of the present invention to detect an add-on bar code will be described with reference to Figs. 3 to 7.

Fig. 3(a) shows a configuration of a UPC system bar code having an add-on bar code.

The main-part bar code includes a margin, a left guard bar (LGB), left characters, centre bar (CB), right characters, a right guard bar (RGB) and another margin. The add-on part, which begins with a special left guard bar (SLGB), is recorded at a predesignated interval (or number of modules) after a right block (main-part right characters and RGB).

Fig. 3(b) shows a configuration of a UPC/A, EAN8 or EAN13 bar code having an add-on bar code.

In this case the bar code includes a margin, a left block (LGB and left characters), a CB, a right block (right characters and RGB), another margin and an add-on bar code (SLGB and add-on characters). It is stipulated that the characters in the right block should each carry even parity and those in the left block a combination of even and odd parity.

Fig. 3(c) shows a configuration of a UPC/E bar code having an add-on bar code.

The main part of a UPC/E bar code has only a single block. The add-on bar code is recorded some modules after the rightmost edge of the main part.

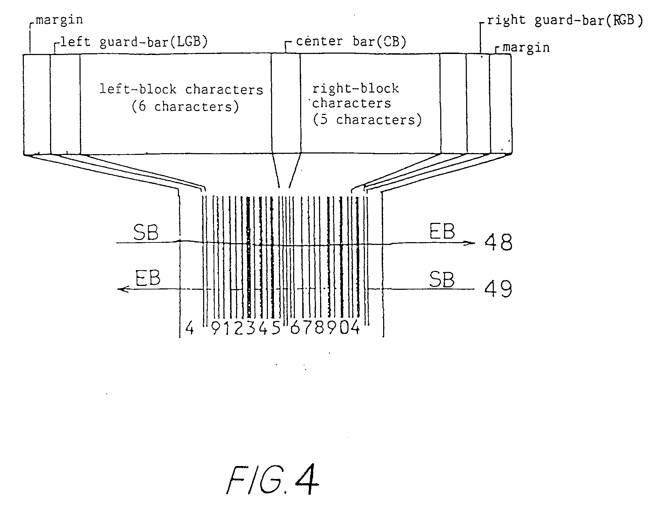

Fig. 4 shows a relationship between a bar code configuration and laser beam scanning.

The scanned beam crosses a start guard bar SB, centre guard bar CB, and end guard bar EB, which correspond to the LGB, CB and RGB in that order when the laser beam is scanned in the direction of the arrow 48, and to RGB, CB and LGB when scanned in the direction of the arrow 49.

Thus, which of the data blocks encountered by the laser beam is the right-hand block varies depending on the direction of laser beam scanning.

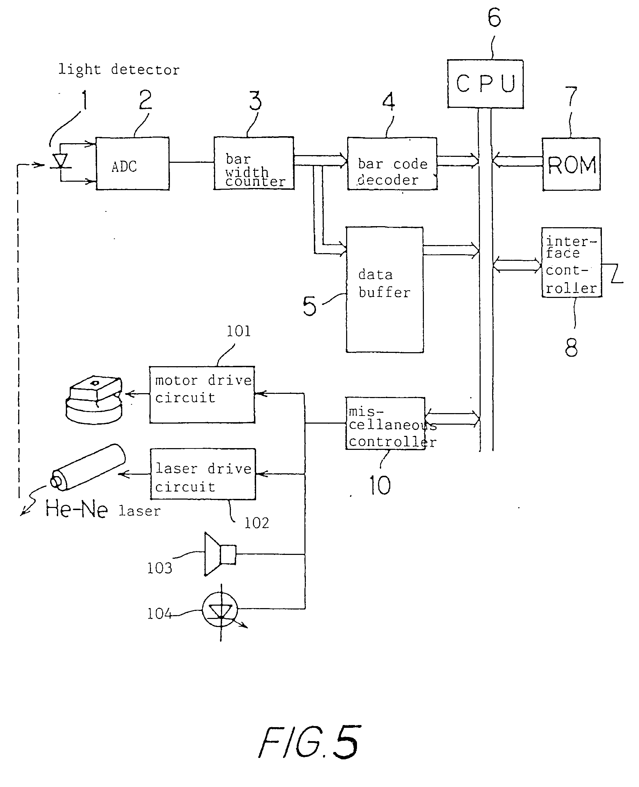

Fig. 5 is a block diagram of an embodiment of the present invention.

A laser beam is irradiated from a helium-neon (He-Ne) laser, scanned over a bar code via a polygon mirror and reflected therefrom. A light detector 1 converts the intensity of the reflected light of the laser beam to an analog electrical signal. An analog-to-digital converter (ADC) 2 receives the analog signal from the light detector 1 and converts it to a digital signal. A bar-width counter 3 measures the width of white and black bars by counting the number of clocks occurring while the digital signal from the ADC 2 is "1" or "0" corresponding to the bar being black or white, and outputs (white- and black-) bar-width data based on the measured width of white and black bars.

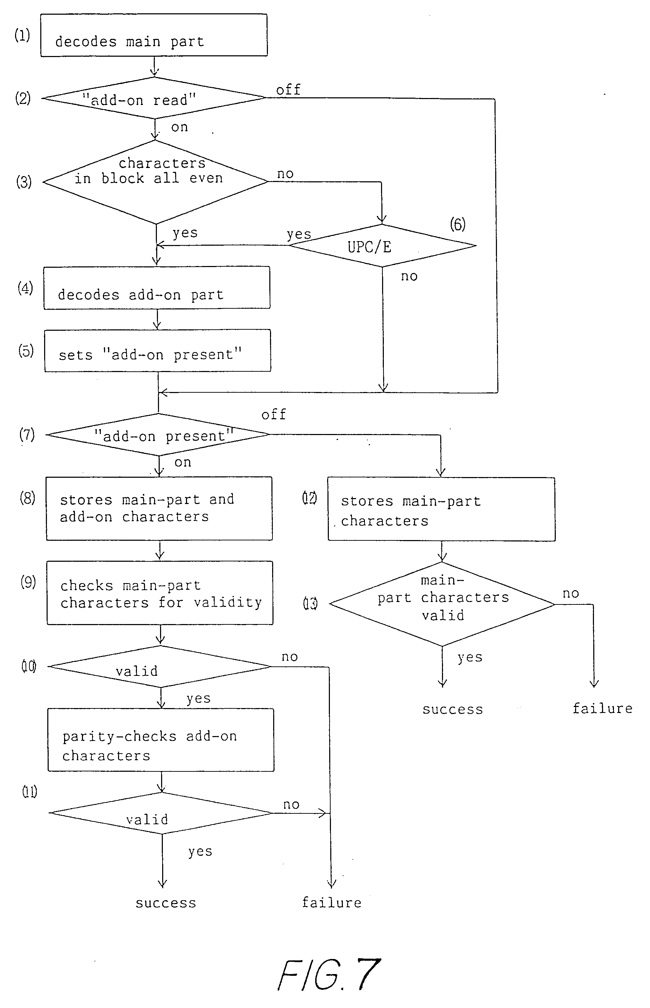

A bar-code decoder 4, which comprises circuits as shown in Fig. 2, detects the start guard bar SB, centre guard bar CB and end guard bar EB, generates pointer signals indicating the bar code type such as UPC/A, UPC/E, EAN13, EAN8 and decodes the bar code into alphanumeric characters. A data buffer 5 temporarily stores the characters decoded, which are later sent to a POS terminal, for example. A microprocessor unit (CPU) 6 performs the processing illustrated in the flowchart in Fig. 7, as instructed by a control program stored in a read-only-memory (ROM) 7.

An interface controller 8 controls communication with a POS terminal, for example, to send the data read from a bar code. A miscellaneous controller 10 controls a laser drive circuit 102 which drives a He-Ne laser, a motor drive circuit 101 which rotates a polygon mirror to produce a scanning laser beam, a speaker or buzzer 103 and a display indicator 104.

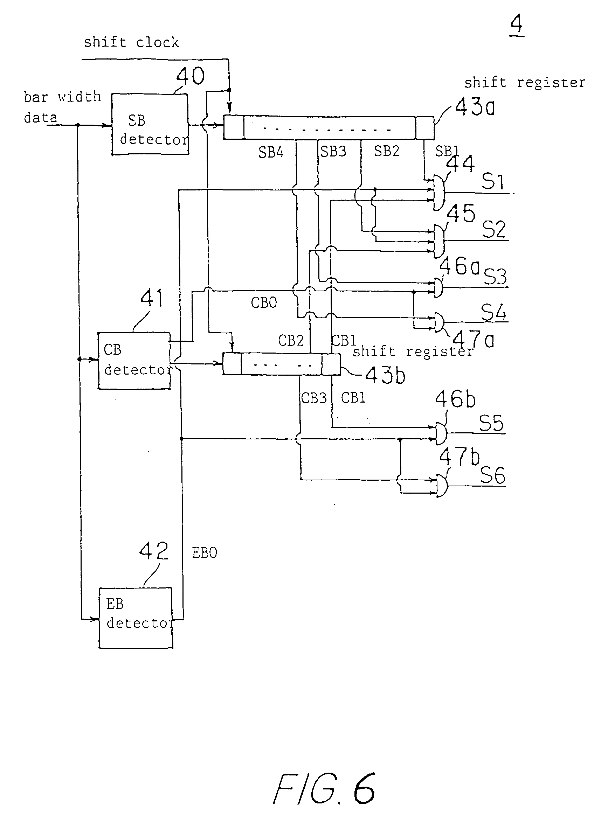

Fig. 6 is a detailed circuit of part of the bar-code decoder 4.

A start guard-bar detector (hereinafter called SB detector) 40, centre guard-bar detector (CB detector) 41 and end guard-bar detector (EB detector) 42 detect the SB, CB and EB, respectively (see Fig.4) by decoding the bar width data from the bar width counter 3. The CB shows a symmetry between the left and right halves, irrespective of the direction of laser-beam scanning.

The SB is defined as a guard bar following a margin, and the EB as a guard bar followed by a margin. Therefore, when a laser beam is scanned along the arrow 48, the SB is the left guard bar (LGB) and the EB is the right guard bar (RGB); when a laser beam is scanned along the arrow 49, the SB is the right guard bar (RGB) and the EB is the left guard bar (LGB). Thus, the SB, CB and EB can be detected based on the bar-width data from the bar-width counter 3 in Fig. 6.

A shift register 43a inputs logical 1 (hereinafter represented as "1") and right-shifts it in synchronisation with a shift clock, from the time when the SB detector 40 detects the SB. Similarly, a shift register 43b inputs "1" and right-shifts it from the time when the CB detector 41 detects the CB.

AND gates 44 to 47b output pointer signals S1 to S6 respectively by ANDing any of signals SB1 to SB4, CB0 to CB3 and EB0. Signals CB0 and EB0 become active when the CB detector 41 and EB detector 42 detect the CB and EB, respectively, in the bar-width data from the bar-width counter 3. Signals SB1 to SB4 become active when the "1" input by the SB detector 40 is shifted to respective positions thereof in the shift register 43a. Signals CB1 to CB3 become active when the "1" input by the CB detector 41 is shifted to respective positions thereof in the shift register 43b.

The pointer signals S1 to S6 are generated as follows:-

(1) When the SB is detected by the SB detector 40, the shift register 43a starts shifting the "1";

(2) When the CB is detected by the CB detector 41, the shift register 43b starts shifting the "1";

(3) When the CB is detected, either S4 (an AND of CB0 and SB4) or S3 (an AND of CB0 and SB3) becomes active depending on which of SB4 and SB3 is active, i.e. depending on how far the "1" is shifted, which means whether the main bar code includes 4 or 6 characters respectively between the SB and CB;

(4) When the EB is detected by the EB detector 42, either S2 (an AND of EB0, CB2 and SB2) or S1 (an AND of EB0, CB1 and SB1) becomes active depending on whether the main bar code includes 8 or 12 characters respectively between the SB and EB. Similarly, either S6 (an AND of EB0 and CB3) or S5 (an AND of EB0 and CB1) becomes active depending on whether the main bar code includes 4 or 6 characters respectively, between the CB and EB.

Thus, pointer signals S1 to S6 are generated depending on the bar-code system in use (UPC/A, ENA 8-character, ENA 13-character and UPC/E). These pointer signals S1 to S6 are used to detect an add-on bar code following the main-part bar code, as described below.

Fig. 7 is a flowchart explaining how an add-on bar code is read.

In Fig. 7, the bar-code decoder 4 performs the following operations:-

(1) Decodes the main-part bar code. That is, the bar-code decoder 4 recognises a block of the main-part bar code (see Fig. 3(a)) based on the pointer signals S1 to S6 and converts the bar code into alphanumeric characters;

(2) Determines whether an "add-on read" flag is on. The flag is set by an operator using a key (not shown) provided on the bar-code reader, when an add-on bar code is desired to be read. When the flag is not on, the processing goes to step 7 without reading an add-on bar code;

(3) When the flag is on, determines whether the block concerned is a right (right-hand) block by checking whether all the characters within the block are even. It is stipulated that all the characters included in the right block should carry even parity. A character is defined to carry even parity when the number of modules constituting the black bars within the character is even;

(4) Decodes the add-on bar code. That is, when the block concerned is a right block (yes) or the UPC/E code system is used (see step (6)), the bar-code decoder 4 recognises a bar code which occurs a predetermined number (7 to 10) of modules after the right block as an add-on bar code, and decodes the add-on bar code into characters;

(5) Sets an "add-on present" flag, indicating that an add-on bar code has been decoded;

(6) When all the characters in the block are not even (no), the decoder 4 determines, based on the pointer signals S1 to S6, whether the code system used is the UPC/E, which has only a single block (without a right block). When the UPC/E code is used (yes), the processing goes to step (4); otherwise (no), i.e. when the block is a right block, to step (7);

(7) Determines whether the "add-on present" flag is set on;

(8) When the flag is on (yes), the decoder 4 stores the main-part and add-on characters in the data buffer 5;

(9) Checks the main-part characters for validity;

(10) When invalid (no), the reading is a failure;

(11) When the main-part characters are valid (yes), the decoder 4 parity-checks the add-on characters. When an error is detected (no), the reading is failure; otherwise (yes), a success;

(12) When the "add-on present" flag is not on (no), the decoder 4 stores the main-part characters in the data buffer 5;

(13) Checks the main-part characters for validity. When an error is detected (no), the reading is a failure; otherwise (yes), a success.

As described above, the present embodiment reads a main-part bar code, and detects the right block in the main-part characters. It detects an add-on bar code a predetermined number of modules after the right block, reads the add-on bar code and checks the add-on characters for validity. Thus, the add-on bar code can be read automatically and properly in the same way as for a normal bar code having no add-on bar code.

Although the above description refers to detection of "black" and "white" bars in a bar code, it will be understood that not all bar codes are actually black and white; therefore, the terms "black" and "white" in the description and claims are to be taken as including any colours which are relatively absorbing or relatively reflecting, respectively, of a scanned laser beam.

**Claims**

1. Bar-code reading apparatus for reading a bar code, including a main-part bar code and an add-on bar code, detecting a start guard bar and end guard bar of the main-part bar code and decoding the read bar code into characters, comprising:-

   right-end detection means for detecting a right end of the main-part bar code based on the start guard bar and end guard bar;

   add-on bar-code detection means for detecting a bar code occurring a predetermined interval after the right end as the add-on bar code; and

   means for decoding the add-on bar code detected by said add-on bar code detection means.

2. Bar-code reading apparatus as claimed in claim 1, further comprising:-

   manually-operable indication means for indicating whether or not an add-on bar code is to be read.

3. Bar-code reading apparatus as claimed in claim 1 or 2, wherein said right-block detection means comprises:-

   block identification means for identifying any of the blocks of the main-part bar code, based on the start guard bar, centre guard bar and end guard bar; and

   right-block determination means for checking whether all the characters in the block concerned carry even parity and determining the right block in dependence upon the checking.

4. Bar-code reading apparatus as claimed in claim 3, wherein said right-block determination means comprises code-system determination means for determining a code system used, and wherein said right-block determination means regards the block concerned as being the right block when the code system is one having only one block.

5. Bar-code reading apparatus as claimed in claim 4, wherein said code system determination means comprises:-

   conversion means for measuring the widths of black and white bars in said bar code and converting the widths to a bar-width signal;

   start guard-bar detection means for detecting a start guard bar based on the bar-width signal;

   centre guard-bar detection means for detecting a centre guard bar based on the bar width signal;

   end guard-bar detection means for detecting an end guard bar based on the bar width signal;

   first shift means for inputting an indicator and shifting it, from the time when the start guard bar is detected by said start guard-bar detection means;

   second shift means for inputting an indicator and shifting it, from the time when the centre guard bar is detected by said centre guard bar detection means; and

   means for determining the code system in use based on the detection by said centre guard-bar detection means, end guard-bar detection means, first shift means and second shift means.

6. A bar-code reading method in which a bar code including a main-part bar code and an add-on bar code is read, a start guard bar and end guard bar of the main-part bar code are detected, and the bar code is decoded into characters, the method comprising the steps of:-

   detecting a right end of the main-part bar code based on the start guard bar and end guard bar;

   identifying an add-on bar code by detecting a bar code occurring a predetermined interval after the right end; and

   decoding the add-on bar code.

UPC/A
UPC/E
EAN/13
EAN/8

SLGB DB

X  Y

main-part bar code      2-character add-on
bar code

# FIG. 1 (a)

UPC/A
UPC/E
EAN/13
EAN/8

SLGB DB   DB   DB   DB

V  W  X  Y  Z

main-part bar code      5-character add-on
bar code

# FIG. 1 (b)

| (10×X+Y)/4 | parity for | |
|---|---|---|
| | X | Y |
| residual 0 | ODD | ODD |
| residual 1 | ODD | EVEN |
| residual 2 | EVEN | ODD |
| residual 3 | EVEN | EVEN |

FIG. 2 (a)

| α | parity for | | | | |
|---|---|---|---|---|---|
| | V | W | X | Y | Z |
| 0 | EVEN | EVEN | ODD | ODD | ODD |
| 1 | EVEN | ODD | EVEN | ODD | ODD |
| 2 | EVEN | ODD | ODD | EVEN | ODD |
| 3 | EVEN | ODD | ODD | ODD | EVEN |
| 4 | ODD | EVEN | EVEN | ODD | ODD |
| 5 | ODD | ODD | EVEN | EVEN | ODD |
| 6 | ODD | ODD | ODD | EVEN | EVEN |
| 7 | ODD | EVEN | ODD | EVEN | ODD |
| 8 | ODD | EVEN | ODD | ODD | EVEN |
| 9 | ODD | ODD | EVEN | ODD | EVEN |

FIG. 2 (b)

7

FIG. 3 (a)

main part

LGB   CB   RGB

left characters | right characters | margin

margin

right block

add-on part

SLGB

add-on characters

main-part right block characters

RGB   SLGB   add-on characters

margin

M (module) M 2M

7~10M

upc/A, EAN8, EAN13, + add-on bar code

FIG. 3 (b)

LGB   CB   RGB   SLGB

left block | right block | add-on part

( a combination of odd and even ) (all even)

main part

upc/E + add-on bar code

FIG. 3 (c)

SLGB

main part | add-on part

( a combination of odd and even )

8

margin

left guard-bar(LGB)

right guard-bar(RGB)

center bar(CB)

margin

left-block characters
(6 characters)

right-block
characters
(5 characters)

SB                                                    EB    48

EB                                                    SB    49

4  912345  678904

FIG.4

light detector

ADC — 2

bar width counter — 3

bar code decoder — 4

CPU — 6

ROM — 7

data buffer — 5

interface controller — 8

motor drive circuit — 101

laser drive circuit — 102

He-Ne laser

miscellaneous controller — 10

103

104

FIG.5

FIG. 6

FIG.7